# EUROPEAN PATENT APPLICATION

(11) **EP 1 336 467 A1**
(43) Date of publication of application: **20.08.2003**
(21) Application number: 03001713.1
(22) Date of filing: 27.01.2003
(51) Int. Cl.: B29C 70/44, B29D 22/00, F15B 1/10, F16J 12/00

(54) **Method of manufacturing fiber reinforced thermoplastic pressure vessels**

(30) Priority: 13.02.2002 US 74449
(71) Applicant: Essef Corporation d.b.a. Pentair Water Treatment, Chardon, Ohio 44024 (US)
(72) Inventor: LeBreton, Edward T., Mentor, Ohio 44060 (US); Vanherck, Koen, Dessel 2480 (BE)
(74) Representative: Saam, Christophe

(57) **Abstract**

A method of manufacturing hollow, fiber reinforced thermoplastic composite articles, such as a pressure vessel, is disclosed. The thermoplastic binder is chosen to bind the reinforcing fibers together, to provide strength, and to provide ease of manufacture. The method includes placing a preform (10) with an inflatable core (14) into a mold (28,29,44), pressurizing the inflatable core, and heating the mold to enable the thermoplastic binder to melt and distribute throughout the preform, binding the reinforcing fibers. The article is then cooled and removed from the mold (28,29,44), resulting in a hollow molded article (48). The inflatable core (14) may be removed from the article and reused, or the core may become an integral part of the finished article.

## Description

The invention generally relates to a method of manufacturing hollow, reinforced plastic composite articles, and more particularly to a method of producing fiber reinforced pressure tanks for the storage, treatment, and transportation of liquids. These articles are often used as tanks to hold water, such as in water softener devices, residential and commercial water treatment, swimming pool filters, and pressure control accumulators, among other uses.

Plastic composite articles are becoming increasingly important in a variety of industries, showing many advantages over other materials such as metals and ceramics. Fiber-reinforced plastic composite articles can utilize a number of materials in their composition, including glass, carbon, metal, ceramics, and plastics for reinforcing materials with thermosetting or thermoplastic materials used as matrix materials.

Thermosetting resin reinforced fiber composites are well known in the art. Thermoset composites have a number of advantages over traditional metal vessels, including increased corrosion resistance, lighter weight, and insulating properties. Thermoset composites are also easier to process and lighter than ceramic materials.

Thermoplastic reinforced fiber composites share many of the advantages of thermoset composite articles. However, thermosetting resin composites show a variety of disadvantages relative to thermoplastic materials, including relatively lower impact and abrasion resistance, limited shelf life due to chemical reactivity, and thermosets are typically not recyclable because the materials cannot be re-melted after curing, among other disadvantages. In contrast, thermoplastic articles overcome many of these disadvantages, while also allowing uniform wall thickness, precision molding accommodation, smooth internal finishes and texturized external finishes, low toxin or solvent emissions, lower exothermic reactions, among other benefits.

Various methods exist for manufacturing reinforced plastic composite articles. The prior art discloses a variety of methods for manufacturing hollow, cylindrical, fiber-reinforced composite articles utilizing both thermosetting resins and thermoplastics for binding reinforcing materials. However, new methods of manufacture are desirable that may produce a variety of additional benefits.

U.S. Patent Number Reissue 25,241 discloses a method of manufacturing fiber-reinforced molded articles utilizing glass fiber mats which are then impregnated with a thermosetting resin and pressure and heat-treated to form the finished product. U.S. Patent Numbers 4,446,092 and 4,504,530 disclose methods of producing molded thermoset composite articles with resin-rich interiors to avoid the "wicking" of liquids.

Methods of manufacturing pressure vessels with metallic or plastic fittings by fusion or molding techniques and the winding of resin-impregnated filaments is disclosed by U.S. Pat. Nos. 2,848,133; 3,874,544; 3,508,677 and 3,907,149. However, these methods disclose relatively complex assembly techniques.

Alternatively, U.S. Pat. No. 3,825,145 discloses the manufacture of thermoplastic composite vessels by rotationally casting a plastic liner. Also known in the art are additional means of manufacturing thermoplastic composite articles including pultrusion, injection molding, blow molding, among other manufacturing methods available.

A further alternative is to create a preform by a filament winding process. Such an alternative is disclosed by U.S. Pat. No. 6.171,423, incorporated herein by reference, in which a filament wound preform is disclosed wherein a commingled thermoplastic/reinforcement filament is wound on a thermoplastic liner. The preform is inserted in a heated mold and pressurized to form a completed pressure vessel.

Also known in the art are preforms made up of a reinforcing fiber with a binder material intimately mixed throughout. Various methods of manufacturing preforms is disclosed in the art, particularly screen forming and mat lay-up preforms. Such preform manufacturing techniques, for example, are disclosed in U.S. Pat. Nos. 6,030,575 and 4,101,254.

Needed in the art is a flexible means to manufacture both high and low volume thermoplastic fiber-reinforced composite articles with reduced tooling, energy, and labor costs, rapid cycle times, reduced secondary operations, improved assembly methods including welding, and the ability to mold large, integrated and complex moldings in a single operation. Utilizing preforms that can be pre-manufactured, stored, and/or assembled remotely and then shipped to other locations for further processing would also be advantageous.

### BRIEF SUMMARY OF THE INVENTION

The present invention provides a method of manufacturing hollow, fiber reinforced plastic composite articles typically used to contain gasses and/or liquids.

The article is manufactured by providing a hollow preform made up of reinforcing fibers intermixed with a thermoplastic material which is used to bind the reinforcing fibers together and which will form the matrix for a finished molded article. The preform has a cylindrical sidewall portion, a domed bottom portion, and a domed top portion, all of which could be manufactured separately, or in an integrated manner.

The preform is positioned into a rigid mold having a cylindrical sidewall portion and domed end portions, corresponding to the exterior shape of the article to be molded. Additional fittings may be positioned in the mold as well. The preform is positioned against the inner surface of the corresponding mold portions.

An inflatable core contained within the preform is internally pressurized to compress and hold the preform and any other components or fittings in place within the mold. The inflatable core may be a flexible rubberized bladder or a thermoplastic liner made by blow molding, injection molding, or rotational casting techniques, for example. The inflatable core defines the interior shape of the article.

The inflatable core is pressurized while the preform is heated within the mold, at a sufficient temperature and for a sufficient time to melt the thermoplastic binding material and distribute it throughout the reinforcing fibers and thus the preform. The pressure within the inflatable core may be increased during this melting process in order to distribute the liquid plastic matrix uniformly throughout the reinforcing fibers.

The article is then allowed to cool until the thermoplastic material is substantially solid. The inflatable core is depressurized, and the core may then be removed, or left as a part of the finished product. The article is thus ready to be removed from the mold.

### BRIEF DESCRIPTION OF THE DRAWINGS

FIG. 1 is a perspective view of a cylindrical sidewall portion and an integrated bottom dome portion of a preform;
FIG. 2 is a perspective view of a separate top dome portion of the preform of FIG. 1;
FIG. 3 is a perspective view of a pre-assembled preform;
FIG. 4 is an enlarged illustration of a portion of a preform;
FIG. 5 is a perspective view of a cylindrical sidewall portion of a preform according to another aspect of this invention;
FIG. 6 is an exploded view of a rigid mold arrangement showing a preform about to be inserted into the mold;
FIG. 6A shows a preform wrapped with a unidirectional reinforcing mat;
FIG. 7 is a perspective view of the preform of FIG. 3 assembled into an alternative open rigid mold;
FIG. 8 is a perspective view of the preform of FIG. 5 being assembled in the rigid mold of FIG. 7;
FIG. 9 is a perspective view of a finished, molded, hollow, fiber reinforced plastic composite article.
FIG. 10 is a cross-sectional view of a finished, molded, hollow, fiber reinforced plastic composite article with integrated inflatable core permanently attached therein;
FIG. 11 is a perspective view of a finished, molded, hollow, fiber reinforced plastic composite article with an integrated inflatable bag part of which is permanently attached and part of which is unattached therein used as an accumulator device containing liquid and gas in separate compartments.
FIG. 12 shows geodesic domed mandrels for filament winding;
FIG. 13 shows a cylindrical mandrel for filament winding;
FIG. 14 shows filaments being wound on a geodesic mandrel;
FIG. 15 shows filaments being wound on a cylindrical mandrel;
FIG. 16 shows two geodesic domed filament wound preforms;
FIG. 17 shows a cylindrical sidewall filament wound preform;
FIG. 18 shows an exploded view of an assembly of filament wound preforms as utilized by the invention; and
FIG. 19 shows a sectional view of an assembly of filament wound preforms assembled about a core as utilized by the invention;

### DETAILED DESCRIPTION OF THE INVENTION

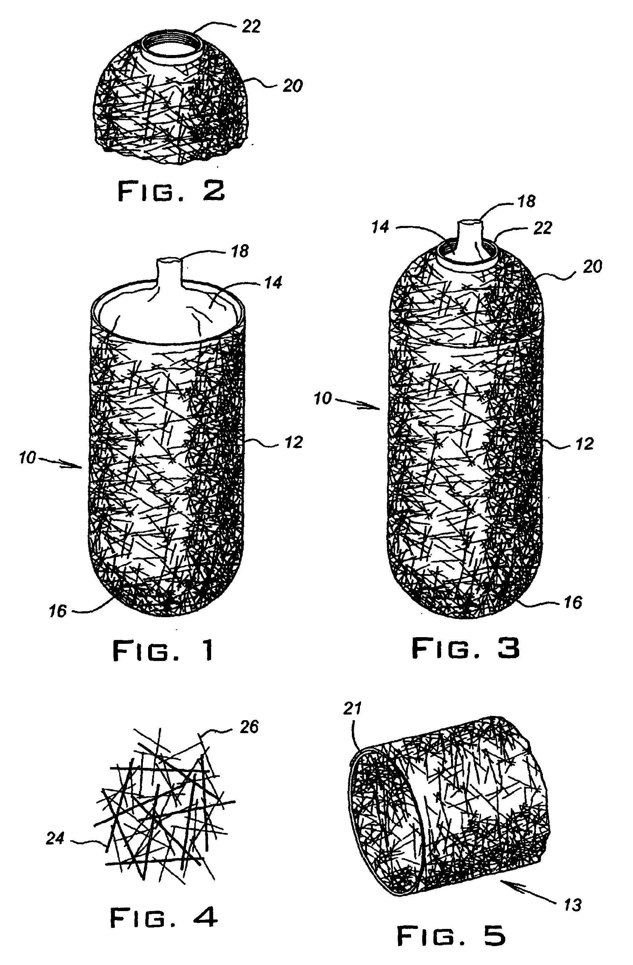

A molded thermoplastic composite article is manufactured according to the invention by utilizing a preform made up of reinforcing material intimately intermixed with a thermoplastic resin. FIGs. 1 and 2 show a preform 10 with a separately manufactured top dome preform 20, according to one aspect of the invention. FIG. 3 shows an assembled preform according to another aspect of the invention. The thermoplastic resins are used to bind the reinforcing material together to give the finished article structure and strength.

The preform 10 may be manufactured by employing the apparatus set forth in U.S. Patent Number 4,101,254, incorporated herein by reference. The thermoplastic and reinforcing fibers are cut and simultaneously dispersed in commingled form onto a vacuum supplied screen, and either sprayed with a resin or briefly heated to bind the fibers together into the shape of the preform. The top dome preform 20 is formed by simultaneously dispersing commingled thermoplastic and reinforcing fibers on a concave screen corresponding to the shape of the dome preform 20. The fibers are held on the screen by a vacuum and either sprayed with a resin or briefly heated to bind the fibers together into the shape of the dome preform.

The preform 10 of FIG. 1 has a cylindrical sidewall portion 12 with an integrated domed bottom portion 16, and utilizes the separate domed top preform 20 of FIG. 2. The top dome preform 20 is provided with a threaded fitting 22 integrated into the top domed portion of the preform, for example. Alternatively the fitting or fittings can be assembled or manufactured with other preform components or fittings while loading the mold, as described herein below. These fittings may be manufactured by injection molding from a compatible thermoplastic resin composite, for example, or the fittings may be manufactured by some other method and/or be comprised of other materials, such as metals, plastics, composites, ceramics, and glasses, for example.

According to one aspect of the invention, the preform is manufactured with an inflatable rubberized core 14 inserted into the preform with a nozzle 18 for connecting to a source of pressure. The rubberized core could be comprised of a material such as neoprene or silicone rubber. FIG. 1 shows the inflatable core 14 inserted in the preform, with a nozzle 18 adapted for connecting to a pressurized air source. FIG. 3 shows the core 14 already installed into a fully assembled preform 10. The inflatable core 14 will define the interior shape of the finished article.

According to another aspect of the invention, the preform is manufactured with a thermoplastic liner as the inflatable core. The liner is manufactured by blow molding, injection molding, rotational casting, or some other technique. This liner will then define the interior shape of the finished article, and can provide a resin-rich interior surface in the finished article to minimize wicking of liquids or fluids through the container wall, as discussed in U.S. Patent Number 4,446,092, for example. As a further alternative, the thermoplastic liner could be fabricated from a thermoplastic film. According to still another aspect of the invention, a rubberized inflatable core is placed inside a plastic liner contained within the preform.

The preform is composed of a thermoplastic resin material and a reinforcing material. The thermoplastic resin is used to bind the reinforcing fibers together and provide a matrix for the reinforced finished article The thermoplastic resin may be polypropylene, for example, and could be in a chopped, fiber, or particulate form. Other thermoplastic resins can also be used, such as polyethylene, polybutylene terephthalate, polyethylene terephthalate, or nylon, among others. The reinforcing material is typically a chopped fiber comprised of glass, carbon, Kevlar, metal, or some other reinforcing material or combinations thereof.

The fiber to resin ratio is optimally chosen for durability, workability and strength, considering the specific use of the finished product. The ratio of reinforcing fiber to thermoplastic material may be constant, or the ratio may vary throughout the preform in some manner, for example along its length, through its thickness, or among the various fittings, depending on the desired properties of the finished article. A typical preform has a constant ratio of reinforcing fiber to thermoplastic resin of about 3:2.

The choice of thermoplastic binder matrix and its form depends on the desired properties of the finished article, the desired method of manufacturing the preform, the workability requirements of the preformed and molded articles, and the cost of the available raw materials. The optimum reinforcing material is chosen based on similar considerations.

FIG. 3 shows a fully assembled preform according to an aspect of the invention as it may appear before undergoing the heat treatment in the mold. According to one aspect of the invention shown in FIG. 4, the fibers in the preforms of FIGs 1, 2, and 3 are typically loosely held together and are not yet bound in a matrix. FIG. 4 shows an enlarged view of the cut thermoplastic fibers 24 intermixed with the reinforcing fibers 26. The length of the fibers is chosen to provide desirable properties in the finished product and for easy workability of the preform or the formed article. The fibers may all be of a similar length, or the fiber lengths may be varied according to the specific properties desired. Thermoplastic fibers of approximately 5.08 cm (two inches) lengths combined with reinforcing fibers of approximately 2.54 cm (one inch) lengths have proven to provide acceptable properties for many preforms, formed articles, and typical manufacturing techniques.

The preform thickness may be substantially constant or vary, for example, along the length of the preform, or among the various components or fittings, according to the requirements and the desired properties of the particular finished article.

Alternatively, the cylindrical sidewall portion 12 of the preform 10 may be formed from a substantially rectangular blanket or mat of reinforcing fibers intimately intermixed with a thermoplastic material, rolled to provide an overlap 21 as is shown by the cylinder 13 in FIG. 5. The blanket is rolled about a partially inflated rubberized core 14 or a plastic liner, with the domed portions of the preform manufactured as discussed hereinabove. Fiber reinforced thermoplastic preforms of still different compositions and arrangements can also be utilized for further aspects of the invention.

As a still further alternative, the preform is manufactured by using a filament winding process. Using such a process, reinforcing filaments, such as glass, for example, commingled with thermoplastic filaments, are dipped in a resin bath or sprayed with a resin and then are wound over a mandrel or liner. Alternatively, a filament or tape containing a reinforcing fiber prepreged with a thermoplastic can be used as the winding filament. A heat source, such as a hot air, infrared, or a flame could then be used to soften the thermoplastic and thereby bind the filament or tape together on the mandrel or liner.

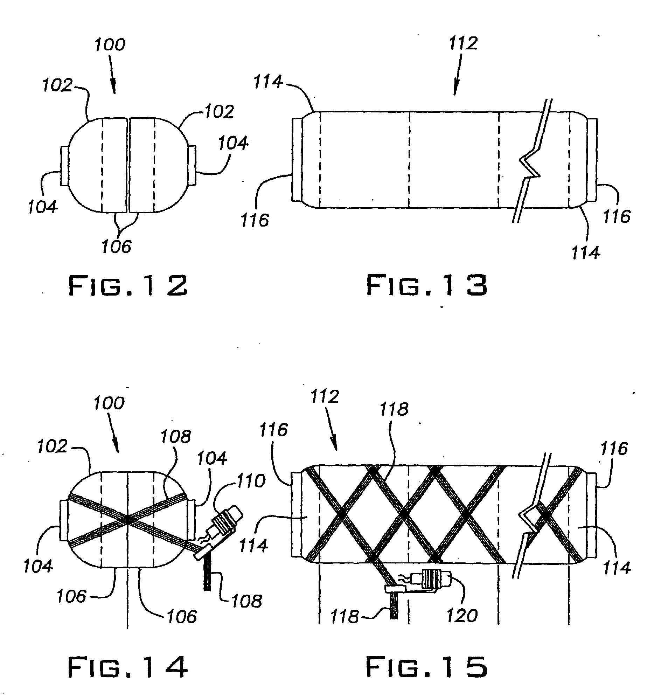

Referring now to FIGs. 12 through 19 there is illustrated a technique for providing a preform which is formed by filament winding unidirectional, commingled strands of a thermoplastic and reinforcement fibers. The thermoplastic and reinforcement fiber may be of the type previously described and the ration of reinforcement fiber to thermoplastic fiber may be about 3:2.

FIG. 12 illustrates a winding mandrel 100 for forming isotensoid end cap preforms. The mandrel 100 may be hollow or solid and may be made from any suitable material such as wood or plastic. The mandrel may be a one-piece mandrel or the illustrated two-piece mandrel 100. The mandrel surface includes domed end portions 102 provided with winding flanges 104 and cylindrical skirt or midportions 106.

As indicated in FIG. 14, the mandrel 100 is mounted in a filament winding machine (not shown). If the mandrel 100 is a split mandrel the mandrel halves are adhered together by tape or equivalent means and the mandrel is wound with a filament 108 which comprises unidirectional, commingled strands of a thermoplastic and reinforcing fibers. The winding pattern is preferably an isotensoid pattern according to the teachings of U.S. Patent 5,526,994, the subject matter of which is incorporated herein by reference. During the winding process, the filament 108 is heated by a suitable heat source 110 to a degree which sufficient to render the commingled thermoplastic tacky, but which is insufficient to melt the thermoplastic. Thus the commingled fibers are adhered to one another and, upon cooling, retain their wound shape.

FIG.13 illustrates a winding mandrel 112 for forming helically wound, cylindrical sidewall preforms. The mandrel 112 may be hollow or solid and may be made from any suitable material such as wood or plastic. The mandrel may be a multi-piece mandrel or the illustrated one piece mandrel 112. The mandrel has curved end portions 114 to anchor the windings and winding flanges 116.

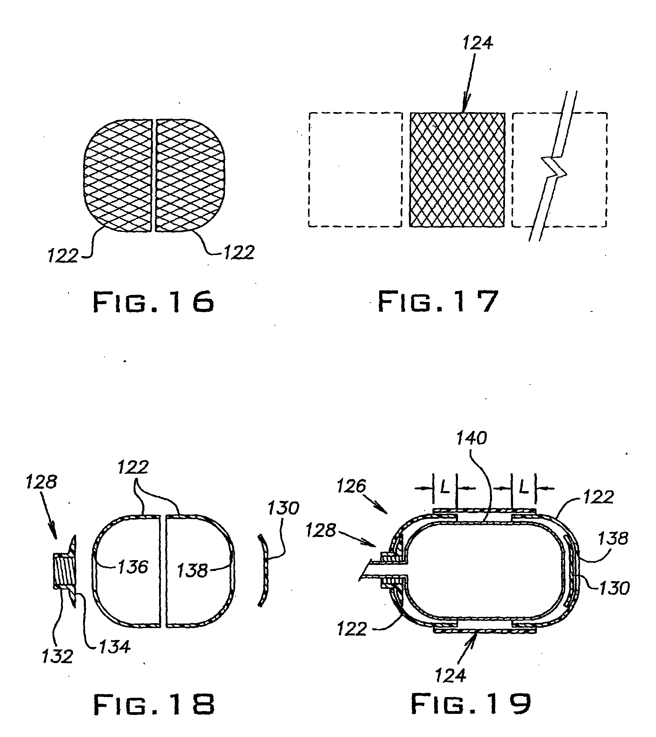

As is indicated in FIG. 15, the mandrel 112 is mounted in a filament winding machine (not shown). The mandrel is wound with a filament 118 which comprises unidirectional, commingled strands of a thermoplastic and reinforcing fibers. The winding pattern is helical with a preferred wind angle of 54.7degrees. During the winding process, the filament 118 is heated by a suitable heat source 120 to a degree which is sufficient to render the commingled thermoplastic tacky, but which is insufficient to melt the thermoplastic. Thus the commingled fibers are adhered to one another and, upon cooling, retain their wound shape.

A pair of isotensoid end caps 122 (FIG. 16) is formed by cutting through the wound preform at its midpoint. If the mandrel 100 is a one-piece mandrel, the cut may also be made through the mandrel.

A variety of side wall lengths may be produced from the preform wound on the mandrel 112. A cylindrical sidewall preform 124 (FIG. 17) is formed by cutting through the wound preform to provide a selected sidewall length. The cut may also be made through the mandrel 112.

As is illustrated in FIGs. 18 and 19, a lay-up 126 is assembled by providing a pair of isotensoid end caps 122, and access fitting 128, a sidewall preform 124, a base preform 130, and a cylindrical sidewall preform 124. The access fitting 128 may be of the type illustrated in U.S. Patent No. 4,589,563 and includes an internally threaded neck portion 132, and a radial foot flange 134. The base portion 130 may be woven fibers of thermoplastic and reinforcement, randomly distributed commingled fibers, or filament wound fibers. The access fitting 128 is placed within one of the end caps 122 so that its neck portion 132 projects from an opening 136 in the end cap 122 and an opening 138 in the other end cap 122 is covered by the base preform 130, as shown. The assembly is completed by overlapping the cylindrical skirts 106 of the end caps 122 with the sidewall preform 124. The amount of overlap L (FIG. 19) is determined by the expected shear loading of the sidewall and is established by the axial length of the skirts 106. An inflatable diaphragm 140 may be assembled with or inserted in to the lay-up.

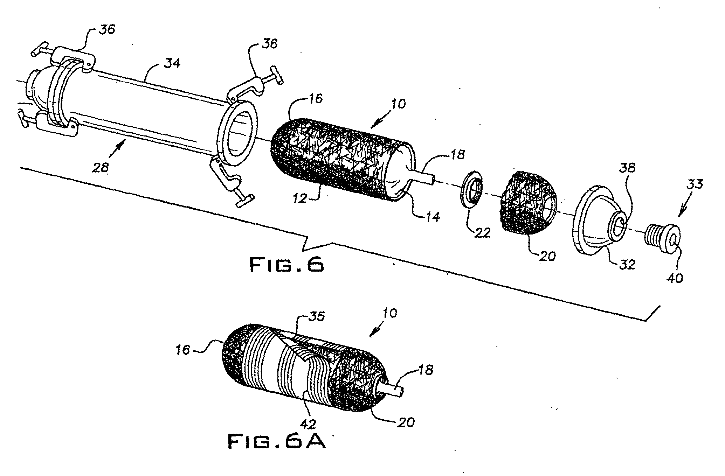

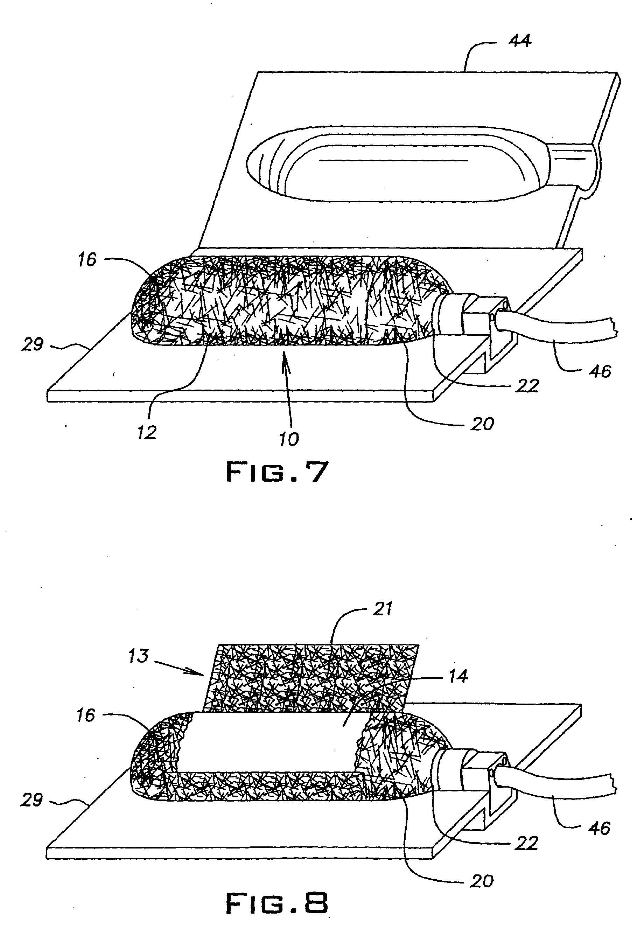

The preform 10 illustrated in FIGs. 1-8 or the lay-up 126 illustrated in FIG. 19 may be molded into a finished article by employing a cylindrical mold 28 illustrated in FIG. 6 or the rigid mold 29 of FIG. 7. While the following description is specific to the preform 10, it should be appreciated that the technique may also apply to the lay-up 126.

Referring now to FIG. 6, the cylindrical mold 28 comprises a bottom mold cap 30, a top mold cap 32, and a tubular body 34. The caps 32 and 30 are clamped to the cylindrical body 34 of the mold 28 by pivoted claims 36. With the top mold cap 32 removed, the core 14 is inserted within the preform 10 and the preform 10 is inserted into the mold 28. The fitting 22, the top preform 20, the top mold cap 32 and a threaded core 33 are pre-assembled by inserting the threaded core 33 into an opening 38 in the mold cap 32 and threading the core 33 into the fitting 22 while sandwiching the top preform 20 between the fitting 22 and the top mold cap 32. The pre-assembly is then placed in the mold 28 with the nozzle 18 projecting through a bore 40 in the threaded core 33. The clamps 36 are then clamped to the cap 32.

The rigid mold defines the outer shape of the finished article. The inflatable core 14 defines the interior shape of the finished article. If a reusable inflatable core is used, such that it will be removed from the molded article, the core 14 may be treated with a releasing agent before or during assembly in the mold to aid in its removal. Alternatively, if the core 14 is to become integrated with the finished article, it may be treated with an adhesive agent to aid in its bonding to the interior of the molded article.

As may be seen in FIG. 6A, the preform 10 may be wrapped with a reinforcing mat 35 having circumferential reinforcing fibers 42 therein to supply added hoop strength to the molded article.

Pre-manufactured fittings or other components are inserted or placed into the mold along with the preform, as shown by fitting 22 of FIG. 6. Alternatively, the fittings may be integrated with preform portions if so manufactured, as shown by fitting 22 integrated with the top-dome preform 20 in FIG. 2. These fittings are added, when required, to provide additional finished product capabilities and features to the finished product. These additional preformed fittings could be made of a variety of different materials, as discussed hereinabove. The sidewall portion 12 and the domed preform portions 16 and 20 may include a variety of preformed fittings providing bosses, projections, and/or other components desirable as part of the finished product.

FIG. 7 shows the alternative rigid mold 29 with a top cover 44. The preform 10 of FIG. 3 is positioned within the mold 29 according to the invention. As a further alternative, FIG. 8 shows the cylindrical sidewall portion 13 of FIG. 5 being assembled into the mold 29 of FIG. 7 with the top dome preform 20 containing the integrated fitting 22 and with the bottom dome preform 16 inserted into the mold 29. The mat making up the cylindrical sidewall portion 13 has an end 21 that will overlap the opposite end to form a completed cylinder. As an alternative, additional fittings and components could also be inserted into the mold to be integrated into the molded article.

After the preform has been placed in the rigid mold, the mold is closed, and the inflatable rubberized core 14, if used, is connected to a source of pressure via a connection 46. The core is inflated with a gas or liquid to compress and hold the preform in place within the mold. If a plastic liner is used within the preform as the core instead of a rubberized bladder, the plastic liner itself may be pressurized by a gas or liquid to prevent collapse. The mold may need to be equipped with venting holes in order to allow for the pressurization of the core, to account for the expansion of the core and/or preform, if the mold is tightly sealed upon closure.

The preform with the core pressurized is then heated within the closed mold to a temperature sufficient to melt the thermoplastic material for a period of time sufficient to allow the thermoplastic material to flow throughout the reinforcing fibers in the preform. The mold could be heated via hot air convection, flame treatment, infrared radiation, ovens, resistance heaters embedded in the mold, or some other heating means. Heating the preform to approximately 204.4 degrees Celsius (400 degrees F) and maintaining that temperature for approximately 30 minutes has proven to be effective in achieving adequate melting and flow properties, and reducing or eliminating voids within the article, especially when polypropylene is used as the thermoplastic material. A thicker preform or different thermoplastic materials may require different heating times or different temperatures for adequate flowing and void reduction to occur.

The pressurized core 14, whether a rubberized bladder or a plastic liner, meanwhile, compresses the sides of the preform against the mold while the thermoplastic material is melting and flowing. The pressurization of the inflatable core aids in the distribution of the melted thermoplastic material throughout the reinforcing fibers and into the inserted components. The pressure within the inflatable core may be increased during this heating and melting process in order to maintain and improve the distribution of thermoplastic material throughout the preform, providing a substantially void-free fiber reinforced molded article which takes on the shape of the rigid mold and binds any inserted components to the molded article. Increasing the inflatable core pressure to approximately 172 to 207 kPa (25 to 30 psi) has proven effective to provide a relatively void-free molded article. Other pressures may be suitable depending on the raw materials used in the preform.

During the heating and/or pressurization process, a vacuum source may be connected to the mold in order to increase the flowing of the melted binding material and even further reduce the incidence of voids improving the properties of the molded article.

When the heating process is complete, the article is allowed to cool within the mold until the thermoplastic material is substantially solid. This cooling may be done with the inflatable core pressurized, and the pressure may be gradually reduced. Alternatively, the pressure may be quickly reduced during the cooling process or even after the cooling process is complete. The article can then typically be easily removed from the mold. The inflatable rubberized core, if used, may be removed from the finished article prior to removing the article from the mold, or after removing the article from the mold. Alternatively, the inflatable core may remain attached to and integrated as part of the finished article to provide a special purpose interior surface, as described herein below.

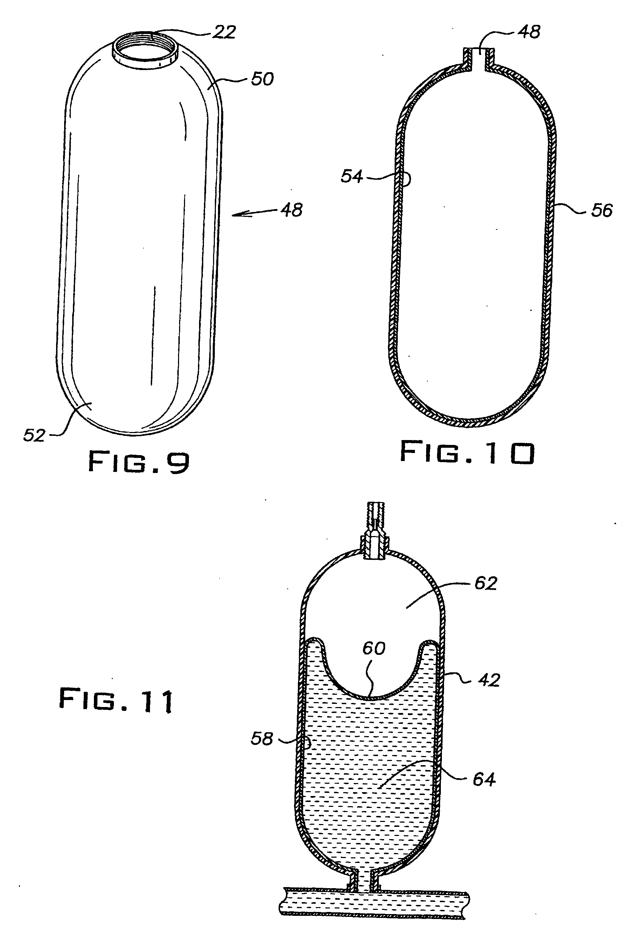

FIG. 9 shows a finished article 48 after removal from the mold, with a top dome portion 50, the integrated fitting 22, and with a bottom dome portion 52. The surfaces are now smoother and the thermoplastic resin is distributed throughout the reinforcing fiber.

FIG. 10 shows the product of an alternative process according to the invention, wherein the core may be treated with an adhesive agent before heat treating, in order to bind a core 54 to the interior of the finished article body 56, making the core an integral part of the finished article. Alternatively, the core may become integrated into the preform by means of the heat treating process itself without the necessity of being treated with an adhesive agent. The core may be a neoprene or rubber bladder, a plastic liner, a thermoplastic film, or some other core design, as discussed hereinabove. The composition and design of the core 54 is chosen according to desirable properties in the finished article. If a plastic liner is chosen to become an integrated part of the finished product, the plastic liner should comprise a thermoplastic material compatible with the thermoplastic material in the preform, so that a fusion bond occurs between them during the heat treating.

Making the core an integral part of the finished article may impart many desired properties to the finished article, such as superior leak resistance, chemical and corrosion resistance, increased durability, increased cleanability, or other similarly desirable properties. Such vessels may have increased water resistance and can reduce the "wicking" effect that results when liquids are stored in typical fiber reinforced plastic articles.

FIG. 11 shows the result of another alternative of the invention, whereby some portions of an inflatable core are treated with an adhesive agent, while other portions are treated with a releasing agent, before the step of heating the mold. This allows only selected portions 58 of the inflatable core to remain adhered to the molded article (i.e., those treated with the adhesive agent), while also allowing the portions 60 of the inflatable core treated with a releasing agent to be disengaged from the molded article. Two compartments 62 and 64, isolated from each other, are thereby formed. Such a tank can serve as a diaphragm; a pressure control accumulator tank, such as disclosed by U.S. Pat. Nos. 4,214,611, 4,595,037, and 4,637,435 for example; or some other purpose requiring a tank with two isolated chambers with a flexible barrier between them.

The invention has been described using specific examples; however, it will be understood by those skilled in the art that various alternatives may be used and equivalents may be substituted for elements described herein, without deviating from the scope of the invention.

## Claims

1. A method of making hollow, reinforced plastic composite articles, comprising the steps of:
a) providing:
i) a hollow preform (10) of reinforcing fibers intimately intermixed with a thermoplastic material, said preform having a cylindrical sidewall portion (12), a domed bottom portion (16), and a domed top portion (20), and
ii) a rigid mold (28, 29, 44) having a cylindrical sidewall portion and domed end portions corresponding to said preform portions;
b) positioning said preform against the inner surface of said corresponding mold portions;
c) compressing said preform with an internally pressurized, inflatable core (14) having a cylindrical sidewall portion, and top and bottom dome portions to hold said preform in place;
d) heating said preform to a temperature sufficient to melt said thermoplastic material while the pressure in said inflatable core compresses said preform and maintains the distribution of the thermoplastic material throughout said preform to provide a fiber reinforced molded article;
e) cooling said molded article until said thermoplastic material is substantially solid;
f) reducing the pressure in said inflatable core (14); and
g) removing said molded article (48) from said mold (28, 29, 44).

2. The method of claim 1 wherein the pressure in said inflatable core (14) is increased during the heating step to compress said preforms (10) and maintain the distribution of thermoplastic material throughout said preform (10), whereby voids in the fiber reinforced molded article may be further reduced.

3. The method of claim 1 wherein said hollow preform (10) comprises a separately preformed sidewall portion (12) and integrated bottom portion (16) and a separately preformed top dome portion (20).

4. The method of claim 1 wherein said hollow preform (10) comprises a separately preformed cylindrical sidewall portion (12) and comprises separately preformed domed portions (16, 20).

5. The method of claim 4 wherein the separately preformed cylindrical sidewall portion (12) is a filament wound sidewall portion and the separately preformed domed portions (16, 20) are filament wound geodesic domed portions.

6. The method of claim 5 wherein the sidewall portions (12) overlap the domed portions (16, 20).

7. The method of claim 4 wherein said cylindrical sidewall portion (12) is formed from a rectangular blanket of said reinforcing fibers intimately intermixed with said thermoplastic material, said blanket being positioned against said cylindrical sidewall portion of the mold with a slight overlap (21) of opposite ends of said blanket.

8. The method of claim 1 wherein the ratio of reinforcing fiber to thermoplastic material is substantially constant throughout said preform.

9. The method of claim 8 wherein said ratio is approximately 3:2.

10. The method of claim 1 wherein the ratio of glass fiber to thermoplastic material varies within said preform.

11. The method of claim 1 wherein the wall thickness of said preform (10) is substantially constant.

12. The method of claim 1 wherein the wall thickness of said preform varies along its length.

13. The method of claim 1 wherein said reinforcing fibers are glass fibers.

14. The method of claim 13 wherein said glass fibers are approximately 2.54 cm (1 inch) in length.

15. The method of claim 1 wherein said thermoplastic material is chosen from the group comprised of: polypropylene, polyethylene, polybutylene terephthalate, polyethylene terephthalate, and nylon.

16. The method of claim 1 further comprising, prior to said compressing, the step of treating the outer surface of said inflatable core (14) with an adhesive agent so that said core is bonded to the interior of said molded article.

17. The method of claim 1 further comprising, prior to said compressing, the steps of:
treating a surface of one of the top and bottom dome portions and an adjacent sidewall portion of said inflatable core (14) with an adhesive agent to provide an adhesive coated portion; and
treating a surface of another of said top and bottom dome portions and an adjacent sidewall portion with a releasing agent to provide a release coated portion; and, after said removing, the step of:
disengaging the release coated portion of said inflatable core (14) from an inner surface of said molded article (48) while the adhesive coated portion remains adhered to an inner surface of said molded article(48).

18. The method of claim 1 further comprising, prior to said compressing, the step of treating the outer surface of said inflatable core (14) with a releasing agent; and, after removing said molded article (48) from the mold, the step of removing said inflatable core from said molded article (48).

19. The method of claim 1 wherein said temperature is approximately 204.4 °C (400 °F) and maintaining said temperature for a period of at least approximately 30 minutes.

20. The method of claim 2 wherein said pressure is increased to approximately 17.444 Mpa (2530 psi).

21. The method of claim 1 wherein said thermoplastic material is in fibrous form.

22. The method of claim 19 wherein said fibrous form is approximately 5. 08 cm (2 inch) lengths of thermoplastic material.

23. The method of claim 1 wherein said thermoplastic material is provided in particulate form.

24. The method of claim 1 wherein said inflatable core is a neoprene bladder.

25. The method of claim 1 further comprising the step of connecting said mold to a source of vacuum during the heating step to further reduce the incidence of voids in the finished article.

26. The method of claim 2 further comprising the step of connecting said mold to a source of vacuum during the heating step to further reduce the incidence of voids in the finished article.

27. A method of making hollow, reinforced plastic composite articles, comprising the steps of:
a) providing:
i) a hollow preform (10) comprised of reinforcing fibers intimately intermixed with a thermoplastic material, said preform having a cylindrical sidewall portion(12), a domed bottom portion (16), and a domed top portion (20);
ii) a hollow plastic liner (14) within said preform, said liner having a cylindrical sidewall portion, a domed bottom portion, and a domed top portion; and
iii) a rigid mold having a cylindrical sidewall portion and domed end portions corresponding to said preform portions;
b) positioning said preform against the inner surface of said corresponding mold portions;
c) heating said preform (10) sufficient to melt said thermoplastic material and distribute the thermoplastic material throughout said preform to provide a fiber reinforced molded article;
d) cooling said molded article until said thermoplastic material is substantially solid; and
e) removing said molded article from said mold.

28. The method of claim 27 wherein said plastic liner (14) is a thermoplastic liner.

29. The method of claim 27 further comprising, during said heating, the step of pressurizing the plastic liner with a gas or a fluid; and prior to removing said molded article from the mold, the step of reducing the pressure in said plastic liner.

30. The method of claim 29 further comprising, during said heating, the step of connecting said mold to a source of vacuum during the pressurizing step to further reduce the incidence of voids in the finished article.

31. A method of making hollow, reinforced plastic composite articles, comprising the steps of:
a) providing:
i) a hollow preform (10) of glass reinforcing fibers approximately 2.54 cm (one inch) long intimately intermixed with thermoplastic fibers approximately 5.08 cm (two inches) long, wherein the ratio of glass fibers to resin fibers is approximately 3:2 uniformly throughout said preform, said preform having a cylindrical sidewall portion, a domed bottom portion, and a domed top portion, and
ii) a rigid mold having a cylindrical sidewall portion and domed end portions corresponding to said preform portions;
b) positioning said preform against the inner surface of said corresponding mold portions;
c) compressing said preform with an internally pressurized, flexible inflatable core having a cylindrical sidewall portion, and top and bottom dome portions to hold said preform in place;
d) heating said preform to approximately 204.4 degrees Celsius (400 degrees F) while maintaining that temperature for between 20 and 60 minutes, while also increasing the pressure in said inflatable core to approximately 172-207 kPa (25-30 psi) to compress said preform and maintain the distribution of the thermoplastic material throughout said preform to provide a substantially void free fiber reinforced molded article;
e) cooling said molded article until said thermoplastic material is substantially solid;
f) reducing the pressure in said inflatable core;
g) removing said molded article from said mold; and
h) removing said inflatable core from the molded article.

32. The method of claim 29 further comprising the step of connecting said mold to a source of vacuum during said heating to further reduce the incidence of voids in the finished article.

33. A method of making hollow, reinforced plastic composite articles, comprising the steps of:
a) providing:
i) a hollow preform (10) of glass reinforcing fibers intermixed with thermoplastic material, said preform having a filament wound cylindrical sidewall portion, a filament wound domed bottom portion, and a filament wound domed top portion, wherein said cylindrical sidewall portion overlaps each geodesic domed portion; and
ii) a rigid mold (28, 29, 44) having a cylindrical sidewall portion and domed end portions corresponding to said preform portions;
b) positioning said preform against the inner surface of said corresponding mold portions;
c) compressing said preform with an internally pressurized, flexible inflatable core (14) having a cylindrical sidewall portion, and top and bottom dome portions to hold said preform in place;
d) heating said preform to approximately 204.4 degrees Celsius (400 degrees F) while maintaining that temperature for between 20 and 60 minutes, while also increasing the pressure in said inflatable core to approximately 172-207 kPa (25-30 psi) to compress said preform and maintain the distribution of the thermoplastic material throughout said preform to provide a substantially void free fiber reinforced molded article;
e) cooling said molded article until said thermoplastic material is substantially solid;
f) reducing the pressure in said inflatable core;
g) removing said molded article from said mold; and
h) removing said inflatable core from the molded article.

34. The method of claim 31 further comprising the step of connecting said mold to a source of vacuum during said heating to further reduce the incidence of voids in the finished article.
